## Europäisches Patentamt
## European Patent Office
## Office européen des brevets

(19)

(11) Numéro de publication : **0 155 233 B1**

(12) **FASCICULE DE BREVET EUROPÉEN**

(45) Date de publication du fascicule du brevet :
27.07.88

(51) Int. Cl.⁴ : **B 23 B 13/02, B 23 B 23/02**

(21) Numéro de dépôt : **85810092.8**

(22) Date de dépôt : **05.03.85**

(54) **Tête de poussoir pour ravitailleur pour tour automatique.**

(30) Priorité : **05.03.84 CH 1088/84**

(43) Date de publication de la demande :
**18.09.85 Bulletin 85/38**

(45) Mention de la délivrance du brevet :
**27.07.88 Bulletin 88/30**

(84) Etats contractants désignés :
**AT BE CH DE FR GB IT LI LU NL SE**

(56) Documents cités :
**DE-C- 874 546**
**DE-C- 900 066**
**GB-A- 1 201 904**
**GB-A- 2 049 504**
**GB-A- 2 059 308**
**US-A- 2 118 301**

(73) Titulaire : **Société de vente et de fabrication pour le décolletage LNS S.A.**

**CH-2534 Orvin (CH)**

(72) Inventeur : **Louis, Alexandre**
**Chemin Mol 37**
**CH-2525 Le Landeron (CH)**

(74) Mandataire : **Dubois, Jean René et al**
**BOVARD SA Ingénieurs-Conseils ACP Optingens-trasse 16**
**CH-3000 Berne 25 (CH)**

Jouve, 18, rue St-Denis, 75001 Paris, France

## Description

La présente invention concerne une tête de poussoir pour ravitailleur de tour automatique, destinée à équiper un poussoir de manière à intervenir en appui contre l'extrémité arrière d'une barre de matériau à usiner, et à pousser cette barre en direction du tour, cette tête comprenant, pour s'engager contre la barre, un retrait avant qui présente au moins une partie de surface conique intérieure.

Dans pratiquement tous les ravitailleurs automatiques pour des machines-outils, typiquement pour des tours automatiques, on a des tubes guide-barres qui contiennent un poussoir muni, à l'avant, c'est-à-dire en direction du tour, d'une tête de poussoir qui pousse la barre de matériau à usiner vers le tour. La tête de poussoir est rotative, de même que, en général, le corps du poussoir situé derrière sa tête. A l'arrière du corps de poussoir, celui-ci est lié à un piston ou autre dispositif d'application de pression, ce dernier étant le plus souvent non mobile en rotation, sa liaison avec le poussoir étant faite par des moyens permettant une rotation mutuelle. On trouve une illustration d'un tel poussoir classique, par exemple dans l'exposé de brevet suisse 514 381. Une même construction est utilisée dans l'appareil ravitailleur du type « Hydrobar », fabriqué par la maison LNS à Orvin et dont les prospectus et manuels d'entretien sont à disposition du public.

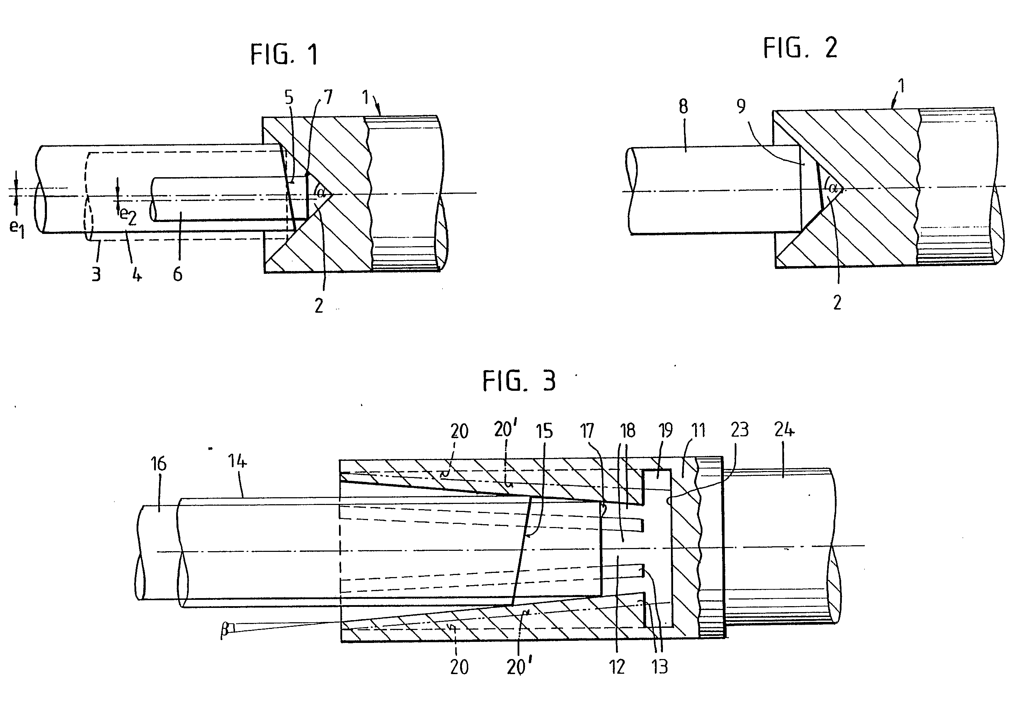

En général, l'extrémité arrière de la barre de matériau à usiner était préparée par un usinage lui donnant une forme de cône ou alors établissant au bord de la face arrière de la barre une surface tronconique. Cette dernière manière de faire est par exemple illustrée au chapitre 3.4.1.1. de la page 14, du manuel d'instruction (accessible à chacun) pour le ravitailleur « Superhydrobar », fabriqué par la maison LNS à Orvin (CH). Cette même nécessité de préparer l'extrémité arrière de la barre de façon tronconique est illustrée par la fig. 2 du présent exposé.

La raison pour laquelle il était, jusqu'ici, nécessaire de préparer, d'une façon conique ou tronconique, l'arrière de la barre de matériau à usiner venant en appui contre la tête de poussoir s'explique d'un coup d'œil à la fig. 1 du présent exposé. On constate que, si l'extrémité arrière de la barre n'était pas adéquatement préparée, le retrait en forme de cône largement ouvert que l'on avait dans les têtes de poussoirs classiques risquait de positionner l'arrière de la barre de matériau d'une manière non centrée par rapport à l'axe du poussoir. Ceci apparaît avec évidence si l'on considère la face arrière d'une barre de matériau à usiner, à l'état brut, en admettant que, chose qui peut facilement arriver lors du sciage des tronçons de barre, la face d'extrémité arrière ne se trouve pas tout à fait perpendiculaire à la direction axiale. La fig. 1 montre que cela mène à un décalage excentrique $e_1$ de la barre. Par ailleurs, lors du sciage préparatoire de la barre, il peut fréquemment arriver que le bord de la face sciée présente une quelconque bavure, et, à nouveau, cette bavure entraîne, même si la face arrière est perpendiculaire à l'axe, un décalage axial $e_2$ de la barre, si celle-ci est appliquée à l'état brut contre la tête de poussoir. C'est la raison pour laquelle, jusqu'à présent, on préparait toujours l'extrémité arrière de barre de matériau à usiner, pour y établir une surface centrée conique ou tronconique, comme le montre par exemple la fig. 2 annexée.

Cette opération supplémentaire de préparation préalable de l'extrémité arrière de barre avant sa mise en place dans un tube guide-barre de ravitailleur, augmentait le coût des opérations de ravitaillement en barres d'une machine-outil automatique, typiquement d'un tour automatique.

Il y a lieu de mentionner ici deux publications antérieures qui, d'une certaine façon, touchent le problème du centrage d'une pièce ou barre dans un embout rotatif présentant un retrait qui comporte au moins des parties de surface conique. Il s'agit des exposés US-A-2 118 301 et GB-A-2 059 308. A vrai dire, les embouts rotatifs proposés par ces exposés ne sont pas des têtes de poussoir de ravitailleur mais bien des équipements de broches ou de contre-broches de tours.

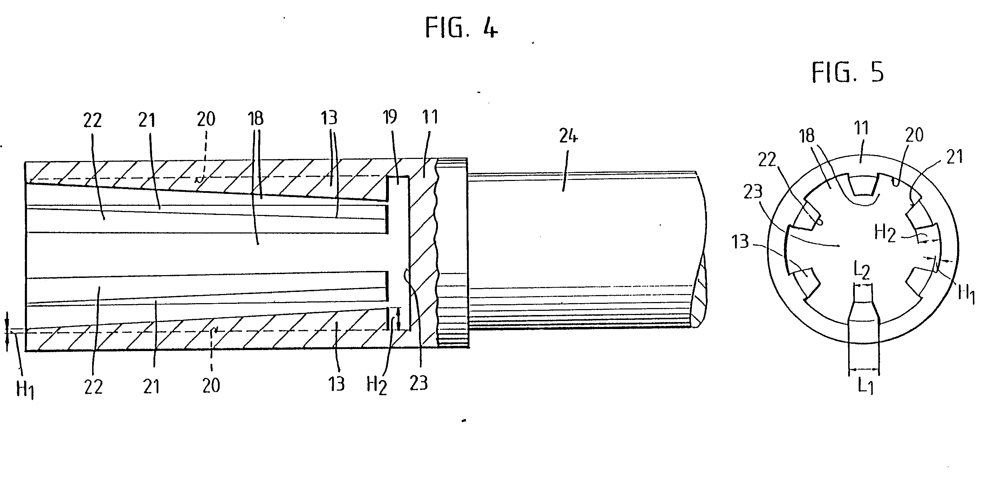

L'exposé américain propose un embout rotatif qui comprend un retrait conique largement ouvert (30° sur l'axe longitudinal). En liaison avec ses fig. 5 et 6, cet exposé antérieur propose de munir l'intérieur conique du retrait de nervures, pour empêcher que d'éventuelles bavures de l'extrémité de pièce ou barre engagée détériorent le centrage de cette pièce ou barre. Les bavures sont censées pénétrer dans l'espace entre deux nervures. Si toutefois une bavure se présente au droit d'une nervure, la non-détérioration du centrage implique d'abord une rotation de l'embout par rapport à la barre, faute de quoi la bavure détériore malgré tout le centrage.

L'exposé britannique propose un embout rotatif présentant un retrait tronconique, exempt de toutes nervures, dont l'angle de conicité est de 8° 30'. On remarque que l'embout rotatif selon cette publication antérieure britannique est destiné à tenir en engagement l'extrémité d'un barreau de bois, sur un tour à tourner le bois. Le serrage d'une extrémité de barre de bois dans le cône intérieur, à faible conicité, d'un embout métallique, implique forcément une certaine compression du bois. L'extrémité d'une barre de métal réagirait différemment. Dans cet exposé britannique, l'avantage de la conicité choisie est présenté comme résidant dans un accroissement progressif de la force. Rien n'est dit d'un effet d'amélioration du centrage obtenu par une conicité relativement faible.

Un but de la présente invention est notamment de fournir une tête de poussoir pour ravitailleur pour tour automatique qui permette l'utilisation d'une barre à l'état brut, c'est-à-dire dont l'extrémité arrière n'a pas besoin d'avoir été préalablement préparée pour obtenir un centrage suffisant de la barre de matériau à usiner par rapport à la tête de poussoir.

Conformément à l'invention, ce but est atteint par la présence des caractères énoncés dans la revendication 1 annexée.

Avantageusement, les nervures mentionnées sont au nombre de six et l'angle de conicité des surfaces sectorielles tronconiques est de 2° à 5° par rapport à la direction axiale.

La très faible conicité des portions de surfaces tronconiques qui reçoivent l'extrémité arrière de barre fait que même un tronçonnage relativement oblique de cette extrémité arrière, s'il entraîne théoriquement un très faible décentrement de la barre, maintient ce décentrement à un niveau si insignifiant que l'on peut, sans aucun doute, le négliger en pratique. Par ailleurs, la présence d'éventuelles bavures ne sera pas gênante, car, au moment où se produit la mise en place, la bavure sera logée dans les interstices entre les nervures, où elle ne gênera pas le centrage de la barre, ou alors, si la bavure vient sur une nervure, celle-ci la rabattra vers l'arrière. De plus, les bords longitudinaux des nervures pourront, si nécessaire, agir en tant qu'arêtes découpantes pour favoriser le rabattement des bavures. La combinaison de la présence des nervures et de la conicité réduite rend l'agencement selon l'invention apte à rabattre adéquatement, et si nécessaire, à cisailler, des bavures ou arêtes malpropres de face arrière de barre, jusqu'à ce que la barre soit complètement engagée dans la tête de poussoir, avec une précision de centrage suffisante.

L'invention atteint la performance de remédier aux risques de défauts de centrage, performance qui n'était pas atteinte (ni même suggérée, rendue évidente) par l'art antérieur.

Le dessin annexé illustre, à titre d'exemple et après deux figures expliquant les inconvénients de l'art antérieur, une forme d'exécution de l'objet de l'invention. Dans ce dessin :

la fig. 1 est une vue expliquant schématiquement les inconvénients de l'art antérieur, dans le cas où une extrémité arrière de barre de matériau à usiner aurait été appliquée à l'état brut, à une tête de poussoir classique,

la fig. 2 illustre, similairement à la fig. 1, la nécessité que l'on avait, avec les têtes de poussoirs selon l'art antérieur, de préparer de façon tronconique (ou conique) l'extrémité arrière de barre de matériau à usiner, contre laquelle vient agir la tête de poussoir,

la fig. 3 est une vue similaire aux figs. 1 et 2 mais concernant la tête de poussoir du type particulier proposé par l'invention, cette illustration montrant que les défauts qui amenaient un décentrage dans le cas de la fig. 1, avec une tête de poussoir classique, ou qui obligeaient de prévoir la préparation montrée à la fig. 2, restent sans effets néfastes dans le cas de la tête de poussoir proposée, ce qui permet d'y introduire des extrémités arrière de barre à l'état brut, c'est-à-dire non préparées par une opération particulière,

la fig. 4 est une vue longitudinale partielle en coupe d'une forme d'exécution de tête de poussoir conforme à l'invention, et

la fig. 5 est une vue en bout de la tête de poussoir représentée à la fig. 4.

La fig. 1, illustrant les inconvénients de l'art antérieur, déjà été brièvement commentée. On y voit que, dans le cas d'une tête de poussoir classique, la mise en place d'une barre de matériau à usiner ayant encore son extrémité arrière à l'état brut risquerait fort d'entraîner un décentrage $e_1$ ou $e_2$ de la barre de matériau à usiner par rapport à l'axe de la tête de poussoir.

Plus précisément, à la fig. 1, la tête de poussoir classique 1 comprend un retrait 2, de forme conique intérieure, dont la conicité $\alpha$ est d'approximativement 45°. On a montré en 3, par une ligne en traits pointillés, comment se positionnerait, dans le retrait conique 2, une barre de matériau à usiner dont la surface arrière, même à l'état brut, serait propre, c'est-à-dire serait bien perpendiculaire à l'axe de la barre et ne présenterait pas de bavure. Une telle barre se positionnerait effectivement de manière centrée par rapport à la tête de poussoir 1. Il y a toutefois peu de chance pour que la face arrière à l'état brut (c'est-à-dire provenant directement du sciage ou tronçonnage) d'une barre de matériau à usiner soit propre, c'est-à-dire bien perpendiculaire à l'axe et exempte de bavures. Dans le cas général, il faut considérer le cas d'une barre de matériau 4 qui, à l'état brut, présente une surface arrière 5 qui n'est pas exactement perpendiculaire à son axe. Au dessin, on a, pour bien illustrer la situation, exagéré l'inclinaison de la face arrière 5, mais il est exact que dans la réalité cette face arrière 5, à l'état brut, présente presque toujours une certaine obliçité. On voit qu'il en résulte un décentrage $e_1$ de la barre 4 par rapport à l'axe de la tête de poussoir 1.

Il faut également considérer le cas d'une barre de matériau à usiner 6 dont la surface arrière à l'état brut, même coupée perpendiculairement à l'axe de la barre, présenterait une bavure de sciage 7. Dans ce cas, l'effet de cette bavure 7 serait également de décentrer la barre 6 par rapport à l'axe du poussoir, comme cela est montré en $e_2$.

La fig. 2 montre comment, selon l'art antérieur, on a jusqu'à présent remédié aux inconvénients expliqués en liaison avec la fig. 1. Dans ce but, l'extrémité arrière de la barre de matériau à usiner 8 était préparée, en ce sens que l'on y établissait une portion de surface conique 9, ayant une conicité correspondant à celle du retrait 2. Dans ce cas, une éventuelle bavure était naturellement éliminée par cette préparation conique de l'extrémité arrière et, même si la face arrière n'était pas perpendiculaire à l'axe, la portion de surface conique 9, établie par la préparation de la barre, était centrée sur l'axe de la barre, ce qui fait que la barre, mise en place dans le retrait 2, se positionnerait de façon centrée par rapport à la tête de poussoir.

Cette manière de faire donne naturellement satisfaction du point de vue du centrage, mais elle implique une opération supplémentaire de préparation, source de complications et de coût de travail accrus.

Par la conception particulière de la tête de poussoir proposée, on arrive à obtenir que la barre de matériau à usiner soit suffisamment centrée sans qu'il soit nécessaire de pratiquer d'abord la préparation conique 9 à l'arrière de la barre. Cela est illustré à la fig. 3.

A cette fig. 3, on a montré une tête de poussoir 11 dans le retrait 12 de laquelle peuvent être engagées une barre de matériau 14 ou une barre de matériau 16 qui présentent, respectivement, les mêmes défauts que la barre de matériau 4 et la barre de matériau 6 montrées à la fig. 1.

Pour bien comprendre les explications fournies par la fig. 3, il y a lieu de considérer déjà les fig. 4 et 5, qui montrent la tête de poussoir selon la conception particulière proposée, à l'état isolé, c'est-à-dire sans qu'une barre de matériau y soit engagée.

On voit que le retrait 12 qui doit présenter au moins des portions de surfaces coniques, est formé d'une façon tout à fait différente.

Tout d'abord, sa conicité β (par rapport à l'axe longitudinal) est de beaucoup inférieure à la conicité α du retrait 2 d'une tête de poussoir selon l'art antérieur. Typiquement, cette conicité se situe aux environs de 4°, selon des variantes raisonnables, elle pourrait se situer dans le domaine de 2° à 5°. De plus, on voit — et cela est particulièrement bien montré à la fig. 5 — que la surface conique de centrage ne se présente pas sur toute la circonférence du retrait, mais seulement sur des parties 13 qui forment des nervures se projetant vers le centre (ou l'axe) à partir d'une surface approximativement cylindrique montrée en 20 (ou d'une surface légèrement conique 20', dans une variante illustrée en traits « mixtes à double points » à la fig. 3). Les nervures 13 laissent entre elles des espaces libres 18 qui vont jusqu'au niveau de la surface 20 (ou 20').

A la fig. 3, on considérera tout d'abord le cas de la barre de matériau à usiner 14 dont la surface arrière 15, à l'état brut, présente une certaine obliquité. En théorie, cette obliquité implique un léger décentrage de la barre 14, par rapport à l'axe de la tête de poussoir. Toutefois, du fait de la très faible valeur de l'angle de conicité β, ce décentrement devient si faible que l'on peut le négliger. Au dessin, il n'est même pas possible de le représenter car il serait de l'ordre de grandeur des traits du dessin, voire plus faible encore.

Dans ces conditions, une barre de matériau à usiner telle que la barre 14 peut être engagée à l'état brut dans le retrait 12 de la tête de poussoir 11, le défaut de perpendicularité entre sa face arrière 15 et son axe ne se traduira que par un décentrement tout à fait négligeable en pratique.

Il faut considérer aussi l'engagement d'une barre telle que la barre 16 qui, ayant peut-être (mais ce n'est pas certain) une face arrière perpendiculaire à son axe, présente quelque part sur le bord de cette face arrière brute, une bavure 17 analogue à la bavure 7 de la barre 6 de la fig. 1. Si cette bavure n'a qu'une faible largeur, elle viendra, avec la tête de poussoir 11 de la fig. 3, se glisser automatiquement dans un des espaces libres 18, entre les nervures 13, de sorte qu'elle ne gênera pas au centrage de la barre 16. Si cette bavure 17 est plus large et vient buter contre une nervure, elle est rabattue par la pression que la nervure, du fait de sa faible obliquité, exerce sur elle d'une façon quasi radiale. Un tel rabattement n'intervient que grâce à la présence de nervures de faible obliquité (ou faible conicité).

Si la bavure est large, ce rabattement fait appel aux arêtes longitudinales des nervures 13, qui sont relativement coupantes et qui peuvent sans difficulté cisailler cette bavure trop large, la divisant ainsi en parties qui passent alors derrière la barre ou dans un espace libre 18.

Ainsi, comme le montre la fig. 3, aussi bien la barre 14, à surface arrière brute non perpendiculaire à son axe, que la barre 16 présentant une bavure 17, se trouveront centrées au moins dans une mesure suffisante en pratique, en étant engagées à l'état brut dans la tête de poussoir 11 de la fig. 3. L'utilisation de cette tête de poussoir permet donc de se passer de l'opération préalable de préparation de l'extrémité arrière de la barre de matériau à usiner, ce qui constitue un important gain de temps et de frais.

A la fig. 3, comme du reste à la fig. 4, on voit que les nervures 13 ne se prolongent pas jusqu'au fond 23 du retrait, mais qu'une gorge circulaire 19 existe entre ce fond 23 et l'extrémité arrière des nervures 13. Cette gorge 19 est ménagée principalement à des fins technologiques, elle sert à éviter qu'il ait une continuité directe entre les nervures 13 et le fond 23. Ceci serait en effet défavorable dans le cas d'une barre dont le diamètre serait trop petit pour la tête de poussoir dans laquelle elle est engagée, de sorte que sa face arrière viendrait buter contre le fond 23, ou plus exactement contre un des angles formés par ce fond et une nervure. En l'absence de la gorge 19, il pourrait arriver qu'une barre de trop petit diamètre soit engagée dans ces conditions, sans que l'opérateur s'en rende compte. Avec la gorge 19, l'opérateur s'en rendra certainement compte, ne serait-ce que par le « flottement » qui s'ensuivrait.

Les fig. 4 et 5 représentent la tête de poussoir pour elle-même, sans barre engagée. Sur ces figures, on voit que les nervures 13 présentent toutes une portion de surface tronconique 22. Ces nervures présentent également des surfaces latérales 21. Deux de ces surfaces sont visibles en arrière-plan dans la vue en coupe de la fig. 4. A la fig. 3, ces surfaces latérales 21 n'ont pas été représentées, pour ne pas surcharger le dessin.

La fig. 5 montre bien la configuration des nervures, avec leurs différentes surfaces. On y a également porté des indications de dimensions, qui sont approximativement celles d'un prototype réalisé et donnant satisfaction, mais qui pourraient naturellement être très notablement modifiées. Tout d'abord, la hauteur de la nervure H, c'est-à-dire la distance entre la surface tronconique 22 et la surface 20 du fond des espaces libres est de quelques dixièmes de millimètre, voire de 1/10 mm, tout à l'avant de la tête de poussoir (hauteur $H_1$). Par contre, à l'arrière des nervures 13, cette hauteur ($H_2$) atteint près de 4 mm ; typiquement, elle se situe entre 3,2 et 4,2 mm. La longueur totale des nervures est d'approximativement 60 mm, ce qui donne une pente d'approximativement 5,7 % correspondant à un angle β d'approximativement 3°15'.

En tant que limite extrême pour la pente (ou la conicité) des surfaces 22 des nervures, on peut admettre 2,5 %, soit un peu moins de 1,5°, comme limite inférieure, et 8°, comme limite maximale. En dessous de la limite inférieure précitée, on aurait des chutes de barre trop grandes, tandis qu'au-dessus de la limite maximum précitée, les défauts de centrage cesseraient d'être négligeables en pratique. Il faut de plus remarquer que, selon l'angle de conicité, la chute de barre va rester « coincée » dans la tête de poussoir, ou non. Selon les types d'appareil, on peut rechercher cette particularité, ou au contraire vouloir l'éviter. Ces considérations permettront de déterminer de cas en cas la conicité β qui est avantageuse.

La largeur des portions de surfaces tronconiques 22 est naturellement plus grande vers l'avant que vers l'arrière des nervures. Vers l'avant, cette largeur $L_1$ est de l'ordre de 4 mm, voire 4,5 mm, tandis que vers l'arrière elle est de l'ordre de 2 à 2,5 mm. Cela signifie que la section longitudinale des nervures, au ras de la surface cylindrique 20, serait une section allongée trapézoïdale, et non pas rectangulaire.

Aux fig. 3 et 4, on voit encore la partie arrière 24 de la tête de poussoir. Cette partie 24 peut soit constituer directement le corps de poussoir, soit constituer une portion servant de fiche s'engageant dans une pièce au moins en partie tubulaire formant le corps du poussoir.

Pour la fabrication de la tête de poussoir, on a eu recours, pour la fabrication d'un prototype, à un tournage intérieur conique, suivi du tournage de la gorge 19 dans le fond du retrait, après quoi les espaces libres 18 ont été établis par mortaisage. Pour une fabrication en série, on adoptera des moyens plus rapides, comprenant par exemple le moulage partiel de la tête de poussoir. Il serait du reste avantageux de réaliser cette tête en deux pièces primitivement distinctes et ensuite solidarisées par exemple par soudure. Ainsi, la partie comprenant les nervures serait entièrement tubulaire et la partie arrière 24 serait ensuite engagée dans l'arrière de cette partie tubulaire, et liée à celle-ci par soudage ou procédé analogue.

On remarque que la tête de poussoir selon la conception particulière qui vient d'être décrite convient particulièrement bien pour des barres de matériau à usiner de section ronde ou hexagonale. On pourrait envisager d'autres sections polygonales, le nombre de nervures étant égal au nombre de côtés du polygone (par exemple huit nervures pour une section octogonale).

La tête de poussoir représentée aux fig. 4 et 5 correspond à un prototype qui avait approximativement 36 mm de diamètre extérieur, destiné à des barres d'un diamètre allant de 20 à 28 mm. Il est clair que des têtes de poussoirs de toutes autres dimensions désirées, pour des barres ayant d'autres diamètres, pourraient également être réalisées avec les mêmes particularités.

On note également que la notion de surface tronconique est, dans le cas particulier, à étendre également à la notion de surface légèrement en forme d'ogive, dans lequel l'angle d'inclinaison varierait quelque peu le long des nervures, les surfaces dirigées vers le centre de celles-ci étant alors aussi légèrement courbes dans le sens longitudinal.

D'une façon générale, le dispositif décrit s'applique à n'importe quelle machine-outil alimentée par un ravitailleur automatique, que ce soit des machines à commande mécanique, électronique ou autre.

## Revendications

1. Tête de poussoir (11) pour ravitailleur de tour automatique, destinée à équiper un poussoir de manière à intervenir en appui contre l'extrémité arrière d'une barre de matériau (14, 16) à usiner, et à pousser cette barre en direction du tour, cette tête comprenant, pour s'engager contre la barre, un retrait avant (12) qui présente au moins une partie de surface conique intérieure, caractérisée en ce que la surface conique intérieure est nervurée dans le sens de la génératrice du cône, dont la conicité maximum est de 8° par rapport à la direction axiale.

2. Tête de poussoir selon la revendication 1, caractérisée en ce que la dite surface nervurée comporte six nervures (13) dont les faces (22) dirigées vers l'axe sont des secteurs d'une surface intérieure tronconique ayant un angle de conicité de 2° à 5° par rapport à la direction axiale.

3. Tête de poussoir selon la revendication 1 ou selon la revendication 2, caractérisée en ce que les nervures (13) de la surface conique intérieure se projettent vers l'axe de la tête à partir d'une surface intérieure approximativement cylindrique (20), leurs surfaces dirigées vers l'axe dépassant la dite surface cylindrique de fond d'environ 0,1 à 0,5 mm tout à l'avant de la tête et d'environ 3,2 à 4,3 mm au fond du dit retrait.

4. Tête de poussoir selon la revendication 1 ou selon la revendication 2, caractérisée en ce que les nervures (13) de la surface conique intérieure se projettent vers l'axe de la tête à partir d'une surface intérieure (20'), présentant une conicité, leurs surfaces dirigées vers l'axe de la surface conique intérieure dépassant la dite surface formant le fond d'environ 0,1 à 0,5 mm tout à l'avant de la tête et d'environ 3,2 à 4,2 mm au fond du dit retrait.

5. Tête de poussoir selon l'une des revendications 1 à 4, caractérisée en ce que les surfaces (22) des nervures (13) de la surface conique intérieure dirigées vers l'axe de la tête et constituant des portions d'un cône, sont plus larges tout à l'avant de la tête qu'au fond du dit retrait.

## Claims

1. Head of a thruster (11) for an automatic lathe feeder, intended to equip a thruster in such a way as to intervene backing up against the rear extremity of a bar of material (14, 16) to be machined and to push this bar in the direction of the lathe, the head comprising (so as to be engaged against the bar) a setback at the front (12) which has an internal surface which is at least partly conical, characterised in that the internal conical surface is ribbed in the direction of the cone distance, whose maximum conicity is of 8° in relation to the axial direction.

2. Head of a thruster according to claim 1, characterised in that the said ribbed surface consists of six ribs (13), whose fronts (22) directed towards the axis are sectors of a tapered internal surface having an angle of conicity of 2° to 5° in relation to the axial direction.

3. Head of a thruster according to claim 1 or claim 2, characterised in that the ribs (13) of the internal conical surface extend towards the axis of the head from an internal surface which is roughly cylindrical (20), the surfaces of the ribs being directed towards the axis exceeding the said base cylindrical surface by approximately 0.1 to 0.5 mm right at the front of the head and approximately 3.2 to 4.3 mm at the rear of the said setback.

4. Head of a thruster according to claim 1 or claim 2, characterised in that the ribs (13) of the internal conical surface extend towards the axis of the head from an internal surface (20'), being conical, their surfaces directed towards the axis of the head, exceeding the said surface forming the base by about 0.1 to 0.5 mm right at the front of the head and about 3.2 to 4.2 mm at the rear of the said setback.

5. Head of a thruster according to one of the claims 1 to 4, characterised in that the surfaces (22) of the ribbings (13) of the internal conical surface directed towards the axis of the head and constituting the portions of a cone, are wider right at the front of the head than at the rear of the said setback.

## Patentansprüche

1. Stosskopf eines Zubringers an einem Drehautomaten, der zum Ausrüsten einer Stossvorrichtung bestimmt ist, um auf Druck gegen das hintere Ende einer zu bearbeitenden Materialstange (14, 16) einzugreifen und diese in Richtung des Drehautomaten zu stossen, mit einer vorderen Einziehung (12), die, um sich mit der Stange zu verbinden, mindestens einen Teil einer inneren konischen Oberfläche darstellt, dadurch gekennzeichnet, dass die innere konische Oberfläche in Längsrichtung des Konus, dessen Konizität höchstens 8° bezogen auf die Körperachse beträgt, mit Rippen versehen ist.

2. Stosskopf nach Anspruch 1, dadurch gekennzeichnet, dass die genannte gerippte Oberfläche sechs Rippen (13) aufweist, dessen zur Körperachse gerichteten Flächen (22) Teile einer inneren kegelstumpfartigen Oberfläche mit einem Konizitätswinkel von 2°-5° inbezug auf die Körperachse sind.

3. Stosskopf nach Anspruch 1 oder 2, dadurch gekennzeichnet, dass sich die Rippen (13) der inneren konischen Oberfläche gegen die Körperachse des Kopfes projizieren und dass ihre gegen die Körperachse gerichteten Flächen, beginnend bei einer im wesentlichen zylinderförmigen Grundoberfläche (20), diese am Kopfanfang um ungefähr 0,1-0,5 mm und am Ende der genannten Einziehung um ungefähr 3,2-4,3 mm überragen.

4. Stosskopf nach Anspruch 1 oder 2, dadurch gekennzeichnet, dass sich die Rippen (13) der inneren konischen Oberfläche gegen die Körperachse des Kopfes projizieren und dass ihre gegen die Körperachse des Kopfes gerichteten Flächen, beginnend bei einer konischen inneren Grundoberfläche (20'), diese am Kopfanfang um ungefähr 0,1-0,5 mm und am Ende der genannten Einziehung um ungefähr 3,2-4,2 mm überragen.

5. Stosskopf nach einem der Ansprüche 1 bis 4, dadurch gekennzeichnet, dass die gegen die Körperachse des Kopfes gerichteten und Teile eines Konus enthaltenden Oberflächen (22) der Rippen (13) der inneren konischen Oberfläche am Kopfanfang breiter sind als am Ende der genannten Einziehung.

FIG. 1

FIG. 2

FIG. 3

0 155 233

FIG. 4

FIG. 5

22  21  20  18  13  19  11        24

H₁  22  21  20        13  H₂  23

18  11  20
22        21
23
13        H₂
L₂        H₁
L₁

2

0 155 233